# EUROPEAN PATENT SPECIFICATION

(11) **EP 3 366 900 B1**
(45) Date of publication and mention of the grant of the patent: **12.02.2020**
(21) Application number: 15909294.9
(22) Date of filing: 27.11.2015
(51) Int. Cl.: F02B 19/00, F02B 19/18, F02B 19/10, F02B 19/16, F02B 19/12

(54) **GAS ENGINE**
GASMOTOR
MOTEUR À GAZ

(43) Date of publication of application: 29.08.2018
(73) Proprietor: Mitsubishi Heavy Industries Engine & Turbocharger, Ltd., Sagamihara-shi, Kanagawa 252-5293 (JP)
(72) Inventor: YOSHIZUMI, Hiroshi, Tokyo 108-8215 (JP)
(74) Representative: Hoffmann Eitle
(86) International application number: PCT/JP2015/083370
(87) International publication number: WO 2017/090177

(56) References cited:
- EP-A1- 2 520 780
- JP-A- 2002 349 265
- JP-A- 2012 137 083
- JP-A- 2014 129 788
- US-A- 5 024 193
- US-A1- 2014 261 298

## Description

### TECHNICAL FIELD

The present disclosure relates to a spark ignition precombustion-chamber type gas engine, especially to a spark ignition precombustion-chamber type gas engine with a precombustion chamber having a characteristic shape.

### BACKGROUND ART

A spark ignition precombustion-chamber type gas engine has been known as a gas engine capable of efficient combustion of lean mixed gas. A typical spark ignition precombustion-chamber type gas engine includes a main combustion chamber formed above a piston inside a cylinder, and a precombustion chamber disposed in the upper section of the cylinder. Mixed gas inside the precombustion chamber is combusted, and combustion flame is injected from a nozzle hole disposed on the lower part of the precombustion chamber, whereby lean mixed gas inside the main combustion chamber is combusted.

In such a spark ignition precombustion-chamber type gas engine, once entering the intake stroke, the piston moves downward, and an air supply valve disposed on the upper part of the cylinder opens, and an exhaust valve disposed on the upper part of the cylinder closes. As the air supply valve opens, lean mixed gas containing a mixture of fuel gas and air is introduced in to the cylinder through an air supply port connected to the air supply valve. As the precombustion chamber fuel gas supply valve opens, precombustion chamber fuel gas is introduced into the precombustion chamber.

Furthermore, when the spark ignition precombustion-chamber type gas engine enters the compression stroke and the piston starts to move upward, the precombustion chamber fuel gas supply valve also closes. Further, the lean mixed gas introduced into the cylinder is compressed as the piston rises, and a part of the lean mixed gas flows into the precombustion chamber through the precombustion chamber nozzle hole. Due to such an inflow of lean mixed gas, the lean mixed gas from the main chamber and the precombustion fuel gas are mixed in the precombustion chamber, thus reaching a density suitable for ignition.

Further, when the piston arrives at the vicinity of the compression top dead center, as the mixed gas in the precombustion chamber is ignited at a predetermined timing with an ignition plug disposed in the precombustion chamber, the mixed gas in the precombustion chamber is combusted, and combustion flame is injected into the cylinder through the precombustion chamber nozzle hole. Due to such injection of combustion flame, the lean mixed gas inside the cylinder is ignited, and is eventually combusted.

As described above, in a spark ignition precombustion-chamber type gas engine, mixed gas having a density suitable for ignition is formed in the precombustion chamber to perform ignition, and combustion flame is injected into the cylinder from the precombustion chamber, whereby it is possible to combust lean mixed gas, which is rather less combustible, efficiently. Thus, by using a spark ignition precombustion-chamber type gas engine, it is possible to achieve a high efficiency and clean exhaust gas.

### Citation List

### Patent Literature

Patent Document 1: JP2003-286849 (see FIG. 4)
EP 2 520 780 A1 discloses features falling under the preamble of claim 1. US 2014/261298 A1 and US 5,024,193 A are further prior art.

### SUMMARY

### Problems to be Solved

However, in a typical spark ignition precombustion-chamber type gas engine, if the flow of mixed gas flowing into the precombustion chamber from the main chamber via the nozzle hole becomes unstable, mixed gas having a density suitable for ignition is less likely to be formed around the ignition plug, which may make combustion in the precombustion chamber unstable in each cycle of the engine. Furthermore, while the stability of a flow of mixed gas to the precombustion chamber is considerably affected by the shape of the nozzle hole, Patent Document 1 does not disclose the shape of the nozzle hole, such as the inner diameter and the length of the nozzle hole, in detail.

In view of the above, an object of at least some embodiments of the present invention is to provide an engine including a nozzle hole whereby mixed gas can flow stably from the main chamber to the precombustion chamber.

### Solution to the Problems

A gas engine according to the present invention has the features of claim 1.

In the above gas engine, the curved surface portion is formed along the periphery of the throat-side opening edge portion of the nozzle hole, and thus it is possible to suppress rapid diffusion of mixed gas when mixed gas is discharged from the nozzle hole into the throat, which makes it possible to suppress separation of mixed gas in the nozzle hole. Furthermore, the throat extends linearly along the center axis of the precombustion chamber, and the ratio of the length of the throat to the inner diameter of the throat is not smaller than 1.6 and not greater than 2.6. Accordingly, it is possible to suppress the risk of occurrence of turbulence in the flow of mixed gas injected into the throat, and make it no longer necessary to change the position of the ignition plug. Furthermore, a value obtained by multiplying a ratio of the inner diameter of the throat to the radius of the curved surface portion by a ratio of the throat diameter to the precombustion chamber upper portion diameter is not smaller than 18, and thereby it is possible to stabilize a flow of mixed gas in the precombustion chamber and suppress deterioration of combustion variation.

Furthermore, in some embodiments, a value obtained by multiplying a ratio of a length of the nozzle hole to a diameter of the nozzle hole by a ratio of the inner diameter of the throat to the precombustion chamber upper portion diameter is not smaller than 1.4.

In this case, with the value obtained by multiplying a ratio of the length of the nozzle hole to the diameter of the nozzle hole by a ratio of the throat diameter to the precombustion chamber upper portion diameter being not smaller than 1.4, it is possible to rectify the flow at the nozzle hole when mixed gas flows into the precombustion chamber from the main chamber. Thus, the flow of mixed gas from the main combustion chamber to the precombustion chamber is stabilized in each engine cycle, and mixed gas of a density that can be easily ignited is formed around the ignition plug, and thus it is possible to stabilize combustion inside the precombustion chamber in each engine cycle.

### Advantageous Effects

According to at least some embodiments of the present invention, it is possible to provide a gas engine including a nozzle hole whereby mixed gas can flow stably from the main chamber to the precombustion chamber.

### BRIEF DESCRIPTION OF DRAWINGS

FIG. 1 is a configuration diagram of the vicinity of a combustion chamber of a gas engine according to an embodiment of the present invention.
FIG. 2 is a diagram showing a half cross-sectional view of a lower section of a precombustion chamber.
FIG. 3 is a graph showing a relationship between a value obtained by multiplying a ratio of the throat diameter to the radius of the curved surface portion inside the nozzle hole by a ratio of the throat diameter to the diameter of the upper portion of the nozzle hole, and an index of combustion variation inside the precombustion chamber.
FIG. 4 is a graph showing a relationship between a value obtained by multiplying a ratio of the length of the nozzle hole disposed on the precombustion chamber to the diameter of the nozzle hole by a ratio of the throat diameter to the diameter of the upper portion of the precombustion chamber and an index of combustion variation inside the precombustion chamber.

### DETAILED DESCRIPTION

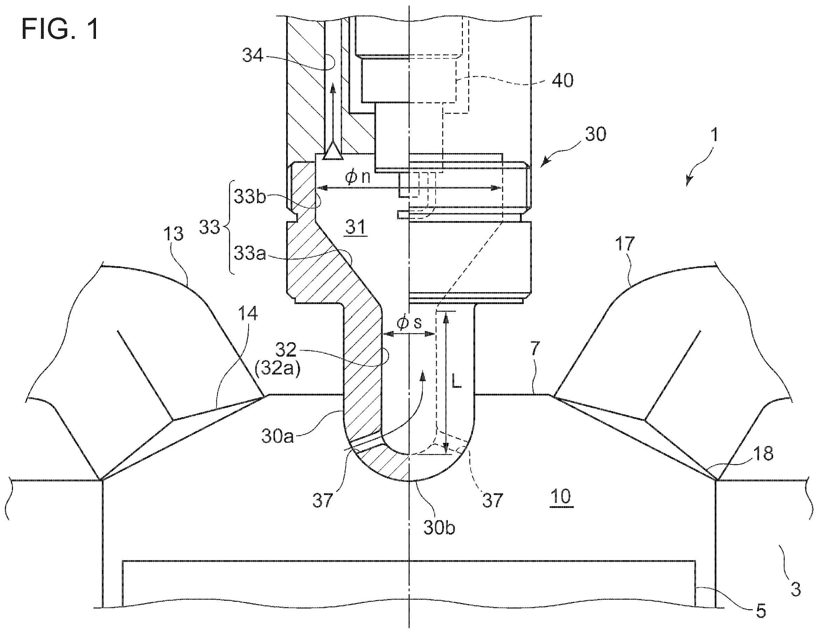

Embodiments of a gas engine of the present invention will now be described with reference to FIGs. 1 to 4. It is intended, however, that unless particularly specified, dimensions, materials, shapes, relative positions and the like of components described in the embodiments shall be interpreted as illustrative only and not intended to limit the scope of the present invention.

As shown in FIG. 1, the gas engine 1 includes a cylinder 3, a cylinder head 7 disposed on the upper portion of the cylinder 3, and a piston 5 disposed inside the cylinder 3 so as to be movable in the up-down direction. A main combustion chamber 10 is formed in a region surrounded by the upper surface of the piston 5, the inner surface of the cylinder 3, and the lower surface of the cylinder head 7. An intake port 13 for supplying fuel is connected to the cylinder head 7, such that fuel supply to the main combustion chamber 10 is controlled through opening and closing of the intake valve 14 disposed on the cylinder head 7. Further, an exhaust port 17 for discharging exhaust gas is connected to the cylinder head 7, such that discharge of exhaust gas from the main combustion chamber 10 is controlled through opening and closing of the exhaust valve 18 disposed on the cylinder head 7.

A precombustion chamber body 30 including a precombustion chamber 31 is disposed on the substantially center part of the upper portion of the cylinder head. The precombustion chamber body 30 extends in the up-down direction and has a bottomed container shape, including a precombustion chamber 31 formed inside, extending in the up-down direction. An ignition plug 40 is disposed on the upper portion of the precombustion chamber 31. The precombustion chamber body 30 includes a precombustion chamber fuel gas passage 34 for supplying the precombustion chamber 31 with fuel. The fuel injected through the precombustion chamber fuel gas passage 34 is mixed with mixed gas supplied to the precombustion chamber 31 through a nozzle hole 37 described below from the main combustion chamber 10 in the compression stroke. The volume of the precombustion chamber 31 is smaller than the volume of the main combustion chamber 10.

The precombustion chamber 31 includes: a throat 32 extending upward from the bottom portion of the precombustion chamber body 30 and having a bottomed cylindrical shape; and an upper precombustion chamber 33 including a diameter widening portion 33a connected to the upper end of the throat 32 and extending upward, with its diameter increasing gradually upward, and a cylindrical portion 33b connected to the upper end of the diameter widening portion 33a and having a cylindrical shape. The precombustion chamber 31 is formed symmetrically with respect to the center axis line. The above described ignition plug 40 is disposed on the upper precombustion chamber 33. On the bottom portion of the throat 32, a plurality of nozzle holes 37 are disposed at predetermined intervals, penetrating through the throat 32 between the outer surface 30a of the precombustion chamber body 30 and the inner surface 32a of the throat 32. The nozzle holes 37 are inclined downward from the center side toward the radially outer side of the precombustion chamber body 30.

The nozzle holes 37 extend linearly and each include end portions with respect to the axial direction. An end portion of each nozzle hole 37 has an opening on the outer surface 30a of the precombustion chamber body 30 and another end portion has an opening on the inner surface 32a of the throat 32. The shape of the nozzle holes 37 will be described below in detail.

In the compression stroke, the gas engine 1 having the above configuration injects mixed gas of the main combustion chamber 10 into the precombustion chamber 31 via the nozzle holes 37, and mixes the mixed gas with fuel injected into the precombustion chamber 31 to achieve a density suitable for ignition. Further, when the piston 5 reaches the vicinity of the compression top dead center, the gas engine 1 ignites mixed gas in the precombustion chamber 31 with the ignition plug 40, and combusts mixed gas in the precombustion chamber 31. Further, combustion flame is injected into the main combustion chamber 10 from the injection nozzle holes 37, and the injected combustion flame ignites the mixed gas in the main combustion chamber 10 to cause combustion.

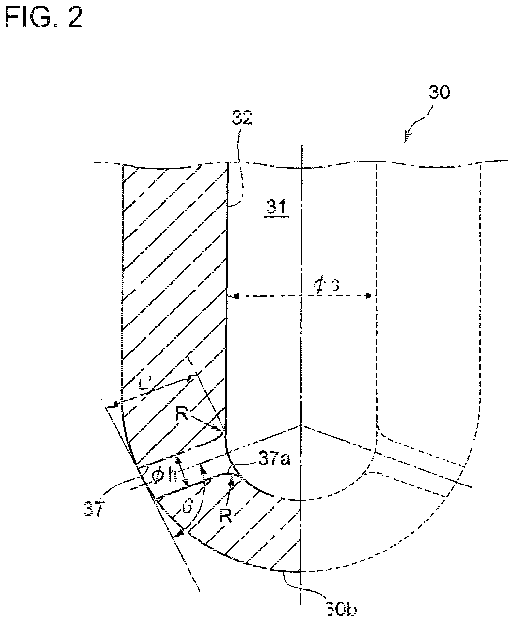

As shown in FIG. 2, the nozzle hole 37 includes a curved surface portion 37a having a curved surface of a predetermined radius R on the opening edge portion on the throat side, formed along the periphery of the opening edge portion. The radius R of the curved surface portion 37a has a constant relationship with the inner diameter ϕ of the throat 32. That is, the throat curved surface 37a is formed such that a value obtained by multiplying a ratio of the inner diameter ϕs of the throat 32 (hereinafter, referred to as "throat diameter cps") to the radius R of the curved surface portion 37a by a ratio of the throat diameter ϕs to the precombustion chamber upper portion diameter ϕn is not smaller than 18. Such a curved surface portion 37a can be formed by chamfering the opening edge portion on the throat side along the periphery of the opening edge portion, after forming the nozzle hole 37 by drilling. Furthermore, the curved surface portion 37a may be formed by a method other than the above, for instance, by casting.

Herein, with the curved surface portion 37a formed along the periphery of the opening edge portion on the throat side of the nozzle hole 37, it is possible to suppress rapid diffusion of mixed gas when mixed gas is discharged from the nozzle hole 37 into the throat 32, which makes it possible to suppress separation of mixed gas in the nozzle hole 37.

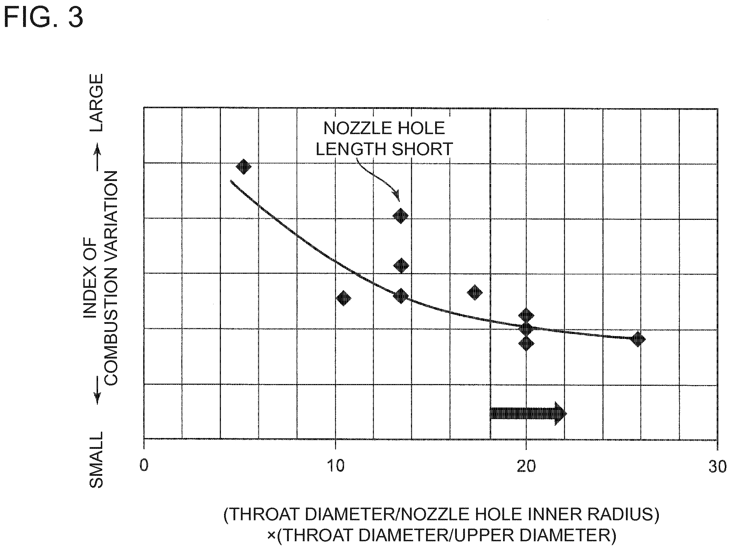

The ratio of the throat diameter ϕs to the radius R of the curved surface portion 37a will be described with reference to FIG. 3. In FIG. 3, x-axis represents a value obtained by multiplying a ratio of the throat diameter ϕs to the radius R of the curved surface portion 37a of the nozzle hole 37 by a ratio of the throat diameter ϕs to the precombustion chamber upper portion diameter ϕn (inner diameter of the above described cylindrical portion 33b), and y-axis represents an index of combustion variation inside the precombustion chamber 31. In the graph, the mark "◆" indicates a measurement value, and the solid line indicates a result estimated from a plurality of measurement values. The index of combustion variation inside the precombustion chamber 31 on the y-axis shows that combustion variation increases toward the upper side of the y-axis, and decreases toward the lower side of the y-axis. As shown in FIG. 3, as the value obtained by multiplying a ratio of the throat diameter ϕs to the radius R of the curved surface portion 37a of the nozzle hole 37 by a ratio of the throat diameter ϕs to the precombustion chamber upper portion diameter ϕn becomes smaller than 18, the increase rate of the index of combustion variation increases. As the value obtained by multiplying a ratio of the throat diameter ϕs to the radius R of the curved surface portion 37a of the nozzle hole 37 by a ratio of the throat diameter ϕs to the precombustion chamber upper portion diameter ϕn exceeds 18, the increase rate of the index of combustion variation decreases and saturates. Thus, the precombustion chamber 31 of the present embodiment is formed such that a value obtained by multiplying a ratio of the throat diameter ϕs to the radius R of the curved surface portion 37a by a ratio of the throat diameter ϕs to the precombustion chamber upper portion diameter ϕn is not smaller than 18.

As described above, the throat diameter ϕs is relatively large with respect to the radius R of the curved surface portion 37a. Thus, as mixed gas is discharged into the throat 32 from the nozzle hole 37, it is possible to stabilize the flow of mixed gas in the precombustion chamber, and suppress deterioration of combustion variation.

Further, the throat diameter ϕs has a constant relationship with the length L (see FIG. 1) of the throat 32. That is, the ratio of the length L of the throat 32 to the throat diameter ϕs is not smaller than 1.6 and not greater than 2.6. If the ratio of the length L of the throat 32 to the throat diameter ϕs is smaller than 1.6, there is a greater risk of occurrence of turbulence in the flow of mixed gas injected into the throat 32 through the above described nozzle hole 37. On the other hand, if the ratio of the length L of the throat 32 to the throat diameter ϕs is greater than 2.6, the throat 32 is too long, and it is necessary to change the position of the ignition plug 40. Thus, by forming the above described curved surface portion 37a on the throat-side opening end portion of the nozzle hole 37, with the ratio of the length L of the throat 32 to the throat diameter ϕs being not smaller than 1.6 and not greater than 2.6, it is possible to suppress the risk of occurrence of turbulence in the flow of mixed gas injected into the throat 32.

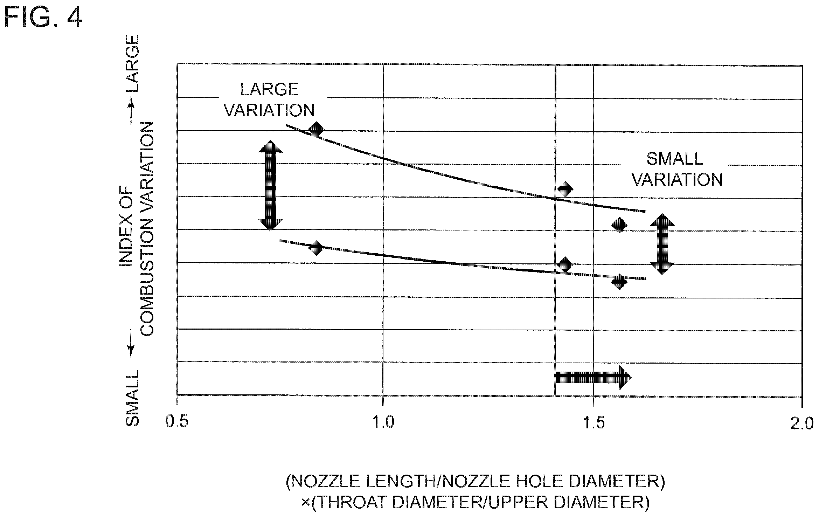

Furthermore, the ratio of the length L' of the nozzle hole 37 to diameter ϕh of the nozzle hole 37 has a constant relationship. That is, the value obtained by multiplying a ratio of the length L' of the nozzle hole 37 to the diameter ϕh of the nozzle hole 37 is not smaller than 1.4. Now, with reference to FIG. 4, the ratio of the length L' of the nozzle hole 37 to the diameter ϕh of the nozzle hole 37 will be described. FIG. 4 is a graph showing a relationship between a value obtained by multiplying a ratio of the length L' of the nozzle hole 37 to the diameter ϕh of the nozzle hole 37 by a ratio of the throat diameter ϕs to the precombustion chamber upper portion diameter ϕn and an index of combustion variation inside the precombustion chamber. The index of combustion variation inside the precombustion chamber 31 on the y-axis shows that combustion variation increases toward the upper side of the y-axis, and decreases toward the lower side of the y-axis. In the graph, the mark "◆" indicates a measurement value, and the solid line indicates a result estimate from a plurality of measurement values.

The measurement value has individual variability with respect to combustion variation, and thus there are two solid lines representing the result. One solid line represents a greater index and the other solid line represents a smaller index. As shown in FIG. 4, if the value obtained by multiplying a ratio of the length L' of the nozzle hole 37 to the diameter ϕh of the nozzle hole 37 by a ratio of the throat diameter ϕs to the precombustion chamber upper portion diameter ϕn is smaller than 1.4, the increase rate of the index of combustion variation increases and the individual variability with respect to combustion variation also increases. On the other hand, if the value obtained by multiplying a ratio of the length L' of the nozzle hole 37 to the diameter ϕh of the nozzle hole 37 by a ratio of the throat diameter ϕs to the precombustion chamber upper portion diameter ϕn is greater than 1.4, the increase rate of the index of combustion variation decreases and the individual variability with respect to combustion variation also decreases. Thus, in the present embodiment, the nozzle hole 37 is formed such that the value obtained by multiplying a ratio of the length L' of the nozzle hole 37 to the diameter ϕh of the nozzle hole 37 by a ratio of the throat diameter ϕs to the precombustion chamber upper portion diameter ϕn is 1.4.

With the nozzle hole 37 formed as described above, it is possible to rectify the flow at the nozzle hole 37 when mixed gas flows into the precombustion chamber 31 from the main combustion chamber 10. Thus, the flow of mixed gas from the main combustion chamber 10 to the precombustion chamber 31 is stabilized in each engine cycle, and mixed gas having a density that can be easily ignited is formed around the ignition plug 40, and thus it is possible to stabilize combustion inside the precombustion chamber 31 in each cycle.

The embodiments of the present invention have been described above. However, the present invention is not limited thereto, and various modifications may be applied as long as they do not depart from the object of the present invention. For instance, some of the above described embodiments may be combined upon implementation.

### Description of Reference Numerals

- 1: Gas engine
- 3: Cylinder
- 5: Piston
- 7: Cylinder head
- 10: Main combustion chamber
- 11: Exhaust turbine
- 13: Intake port
- 14: Intake valve
- 17: Exhaust port
- 18: Exhaust valve
- 30: Precombustion chamber body
- 30a: Outer surface
- 30b: Flat surface portion
- 31: Precombustion chamber
- 32: Throat
- 32a: Inner surface
- 33a: Diameter widening portion
- 33b: Cylindrical portion
- 33: Upper combustion chamber
- 37: Nozzle hole
- 37a: Curved surface portion
- 40: Ignition plug

## Claims

1. A gas engine (1), comprising:
a main combustion chamber (10); and
a precombustion chamber (31) including an ignition plug (40) disposed in a precombustion-chamber upper section and a throat (32) formed in a precombustion-chamber lower section, the throat (32) including a nozzle hole (37), configured such that mixed gas flows into the throat (32) of the precombustion chamber (31) via the nozzle hole (37) from the main combustion chamber (10) in a compression stroke,
wherein the nozzle hole (37) has an opening edge portion on a throat side, the opening edge portion (37a) including a curved surface portion formed along a peripheral edge of the opening edge portion,
wherein the throat (32), having a bottomed cylindrical shape, extends linearly along a center axis of the precombustion chamber (31), the precombustion chamber (31) being formed symmetrically with respect to the center axis and including a diameter widening portion (33a) connected to an end of the throat (32), and
**characterized in that**
a ratio of a length of the throat (32) to an inner diameter of the throat (32) is greater than or equal to 1.6 and less than or equal to 2.6, and a value obtained by multiplying a ratio of the inner diameter of the throat (32) to a radius of the curved surface portion (37a) by a ratio of the inner diameter of the throat (32) to a precombustion chamber upper portion diameter is greater than or equal to 18.

2. The gas engine according to claim 1,
wherein a value obtained by multiplying a ratio of a length of the nozzle hole (37) to a diameter of the nozzle hole (37) by a ratio of the inner diameter of the throat (32) to the precombustion chamber upper portion diameter is greater than or equal to 1.4.

## Patentansprüche

1. Gasmotor (1), Folgendes umfassend:
eine Hauptbrennkammer (10); und
eine Vorbrennkammer (31), die eine Zündkerze (40) beinhaltet, die in einer oberen Sektion der Vorbrennkammer angeordnet ist, und einen Hals (32), der in einer unteren Sektion der Vorbrennkammer gebildet ist, wobei der Hals (32) eine Düsenbohrung (37) beinhaltet, die derart konfiguriert ist, dass gemischtes Gas in einem Kompressionshub über die Düsenbohrung (37) von der Hauptbrennkammer (10) in den Hals (32) der Vorbrennkammer (31) fließt,
wobei die Düsenbohrung (37) einen Öffnungskantenabschnitt auf einer Halsseite aufweist, wobei der Öffnungskantenabschnitt (37a) einen gebogenen Oberflächenabschnitt beinhaltet, der entlang einer Umfangskante des Öffnungskantenabschnitts gebildet ist,
wobei sich der Hals (32), der eine zylindrische Form mit Boden aufweist, linear entlang einer Mittenachse der Vorbrennkammer (31) erstreckt, wobei die Vorbrennkammer (31) bezüglich der Mittenachse symmetrisch gebildet ist und einen Durchmessererweiterungsabschnitt (33a) beinhaltet, der mit einem Ende des Halses (32) verbunden ist, und
**dadurch gekennzeichnet, dass**
ein Verhältnis einer Länge des Halses (32) zu einem Innendurchmesser des Halses (32) größer oder gleich 1,6 und kleiner oder gleich 2,6 ist, und ein Wert, der durch Multiplizieren eines Verhältnisses des Innendurchmessers des Halses (32) zu einem Radius des gebogenen Oberflächenabschnitts (37a) mit einem Verhältnis des Innendurchmessers des Halses (32) zu einem Durchmesser eines oberen Abschnitts einer Vorbrennkammer größer oder gleich 18 ist.

2. Gasmotor nach Anspruch 1,
wobei ein Wert, der durch Multiplizieren eines Verhältnisses einer Länge der Düsenbohrung (37) zu einem Durchmesser der Düsenbohrung (37) mit einem Verhältnis des Innendurchmessers des Halses (32) zu dem Durchmesser des oberen Abschnitts der Vorbrennkammer größer oder gleich 1,4 ist.

## Revendications

1. Moteur à gaz (1), comprenant :
une chambre de combustion principale (10) ; et
une chambre de précombustion (31) incluant une bougie d'allumage (40) disposée dans une section supérieure de chambre de précombustion et un étranglement (32) formé dans une section inférieure de chambre de précombustion, l'étranglement (32) incluant un trou de buse (37), configuré de sorte que du gaz mélangé s'écoule dans l'étranglement (32) de la chambre de précombustion (31) via le trou de buse (37) de la chambre de combustion principale (10) dans une course de compression,
dans lequel le trou de buse (37) présente une portion d'arête d'ouverture sur un côté étranglement, la portion d'arête d'ouverture (37a) incluant une portion de surface incurvée formée le long d'une arête périphérique de la portion d'arête d'ouverture,
dans lequel l'étranglement (32), présentant une forme cylindrique à fond, s'étendant linéairement le long d'un axe central de la chambre de précombustion (31), la chambre de précombustion (31) étant formée symétriquement par rapport à l'axe central et incluant une portion d'élargissement de diamètre (33a) raccordée à une extrémité de l'étranglement (32), et
**caractérisé en ce que**
un rapport entre une longueur de l'étranglement (32) et un diamètre intérieur de l'étranglement (32) est supérieur ou égal à 1,6 et inférieur ou égal à 2,6, et une valeur obtenue par multiplication d'un rapport du diamètre intérieur de l'étranglement (32) à un rayon de la portion de surface incurvée (37a) par un rapport du diamètre intérieur de l'étranglement (32) à un diamètre de portion supérieure de chambre de précombustion est supérieure ou égale à 18.

2. Moteur à gaz selon la revendication 1,
dans lequel une valeur obtenue par multiplication d'un rapport d'une longueur du trou de buse (37) à un diamètre du trou de buse (37) par un rapport du diamètre intérieur de l'étranglement (32) au diamètre de portion supérieure de chambre de précombustion est supérieure ou égale à 1,4.
